# EUROPÄISCHE PATENTANMELDUNG

(11) **EP 1 153 792 A1**
(43) Veröffentlichungstag der Anmeldung: **14.11.2001**
(21) Anmeldenummer: 00109779.9
(22) Anmeldetag: 09.05.2000
(51) Int. Cl.: B60Q 1/26

(54) **Leuchtenanordnung mit mehreren LED's**

(71) Anmelder: SIDLER GMBH & CO, D-72072 Tübingen (DE)
(72) Erfinder: Walker, Steffen, 70794 Filderstadt (DE); Merz, Bernd, 72636 Frickenhausen (DE)
(74) Vertreter: KOHLER SCHMID + PARTNER

(57) **Zusammenfassung**

Bei einer Leuchtenanordnung (1) mit mindestens zwei voneinander beabstandet gehaltenen Kontaktplatten (3, 5) und mit mehreren mit den Kontaktplatten (3, 5) elektrisch leitend verbundenen LEDs sind die Kontaktplatten (3, 5) durch einen elektrisch isolierenden Träger (6) voneinander beabstandet gehalten. Dadurch kann eine möglichst hohe Wärmeableitung von den LEDs erreicht werden. Vorzugsweise ist der Träger (6) eine die Kontaktplatten (3, 5) zumindest teilweise ummantelnde Kunststoffschicht.

## Beschreibung

Die Erfindung betrifft eine Leuchtenanordnung mit mindestens zwei voneinander beabstandet gehaltenen Kontaktplatten und mit mehreren mit den Kontaktplatten elektrisch leitend verbundenen LEDs.

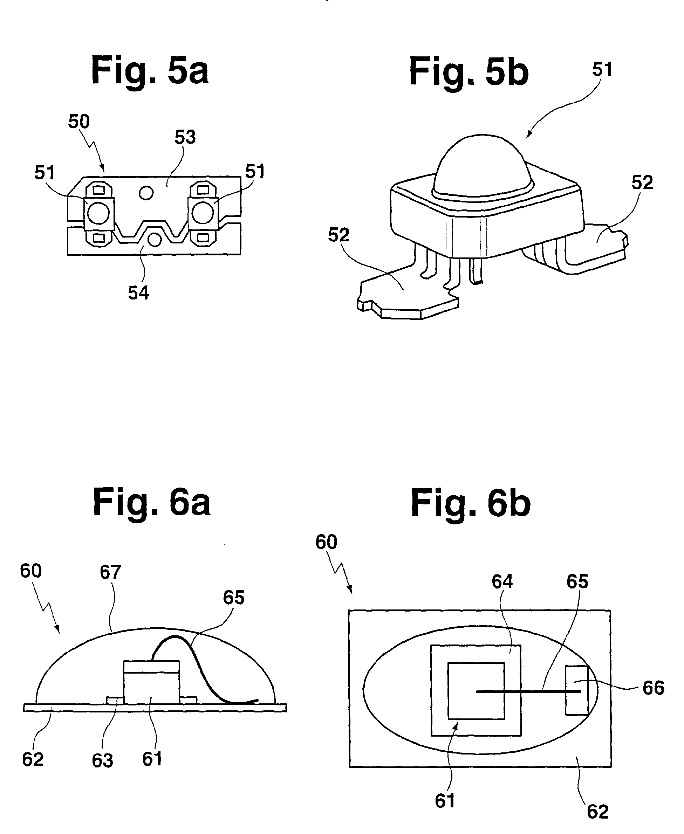

Bei einer bekannten Leuchtenanordnung werden Leuchtdioden (LED) auf einem Stanzgitter verpreßt und dadurch die einzelnen Kontaktplatten des Stanzgitters voneinander beabstandet gehalten. In **Fig. 5a** ist eine solche bekannte Leuchtenanordnung **50** mit zwei LEDs **51** (sog. HP SNAP-LED) gezeigt, deren breite Kontakte **52** (**Fig. 5b**) jeweils auf die Kontaktplatten **53, 54** geclincht (verpreßt) werden. Die SNAP-LED-Technologie hat allerdings den Nachteil, daß diese LEDs sehr teuer sind und in großen Mengen bezogen werden müssen.

Insbesondere bei Signalleuchten sind Leiterplatten mit aufgelöteten LEDs (bedrahtet oder SMD) bekannt. Die Kosten für solche Leiterplatten mit bestückten LEDs sind aufgrund der recht teuren LEDs und des Lötprozesses sehr hoch.

Schließlich sind auch noch Leuchtenanordnungen bekannt, bei denen mehrere LED-Chips direkt auf eine Leiterplatte (Platine) aufgebracht werden. Dieses Verfahren ist als "Chip On Board (COB)" bekannt. Solche Leuchtenanordnungen werden vor allem zur Hinterleuchtung von Symbolen oder Schaltern und großflächigen Anzeigen verwendet. Bedingt durch den breiten Abstrahlwinkel werden diese LEDs nicht bei Signalleuchten eingesetzt. In **Fig. 6a** und **6b** ist eine bekannte Leuchtenanordnung **60** mit einem COB-LED-Chip **61** gezeigt, der auf einer Leiterplatte **62** befestigt ist. Der LED-Chip 61 ist mit einer unteren Kontaktfläche elektrisch leitend mittels Silberleitkleber **63** auf einer dünnen Goldkontaktfläche (Anode) **64** der Leiterplatte 62 befestigt. Auf der Oberseite des LED-Chips 61 befindet sich eine obere Kontaktfläche, die mittels eines gebondeten Golddrahts **65** mit einer anderen Goldkontaktfläche (Kathode) **66** der Leiterplatte 62 elektrisch leitend verbunden ist. Die beiden Goldkontaktflächen 64, 66 sind voneinander elektrisch isoliert. Der LED-Chip 61 und die beiden Kontaktflächen 64, 66 sind mit einer Schutzschicht **67** abgedeckt. Allerdings ist durch die sehr dünne Kupferauflage auf der Leiterplatte 62 die Wärmeableitung vom LED-Chip 61 zur Umgebung nur sehr gering. Dadurch muß der LED-Strom reduziert werden, und es werden mehr oder teuere LEDs benötigt.

Es ist daher die Aufgabe der Erfindung, eine Leuchtenanordnung der eingangs genannten Art derart zu verbessern, daß bei geringen Herstellungskosten eine möglichst hohe Wärmeableitung von den LEDs erreicht werden kann.

Diese Aufgabe wird bei der eingangs genannten Leuchtenanordnung dadurch gelöst, daß die Kontaktplatten durch einen elektrisch isolierenden Träger voneinander beabstandet gehalten sind.

Der mit der Erfindung erzielte Vorteil besteht darin, daß durch die verglichen mit der Kupferauflage einer herkömmlichen Leiterplatte großen Stärke bzw. Querschnitte der Kontaktplatten (ca. 0,2 bis ca. 1 mm) die Wärmeableitung von den LEDs zur Umgebung wesentlich verbessert ist. Dies erlaubt eine deutliche Anhebung des maximal zulässigen LED-Stromes und eine Verringerung der erforderlichen Anzahl an LEDs, so daß Kosten eingespart werden. Auf der anderen Seite kann bei niedrigem Strom die Ausfallsicherheit bei hohen Temperaturen verbessert werden. Durch die geringere Anzahl von Bauteilen und den Wegfall des Lötprozesses und von Befestigungsbohrungen ist eine geringe Toleranz bei der Plazierung der LED und damit ein gleichmäßigeres Erscheinungsbild möglich. Auch wird durch den Wegfall der Leiterplattenherstellung (Belichten, Ätzen, Lackieren mit Lötstopplack, ...) die Umwelt weniger belastet. Bei diesem Verfahren sind auch stufenförmige Absätze in den Kontaktplatten möglich. Dann kann die Leuchtenanordnung z.B. in Rückleuchten eines Kraftfahrzeuges eingesetzt werden, wobei durch die stufenförmigen Absätze die Position der LEDs besser an die Außenkontur der Rückleuchte angepaßt werden kann.

Die vorzugsweise streifenförmigen Kontaktplatten können aus einem Metallblech gemeinsam ausgestanzt, ausgeschnitten oder ausgeätzt werden. Alternativ können auch zwei einzelne Kontaktplatten verwendet werden, die durch den elektrisch isolierenden Träger im Abstand zueinander fixiert werden.

Der Träger kann auf der Ober- und/oder auf der Unterseite der Kontaktplatten vorgesehen sein. Die beiden Kontaktplatten können auf den gemeinsamen Träger aufgeklebt oder auf jegliche andere Art und Weise befestigt werden.

Besonders bevorzugt ist der Träger durch Umspritzen der Kontaktplatten mit Kunststoff hergestellt. Diese Maßnahme hat den Vorteil, daß durch die Kunststoffummantelung die gesamte Leuchtenanordnung unempfindlicher bei Transport und Montage ist. Gleichzeitig können Mittel angespritzt werden, die die Fixierung der Leuchtenanordnung in einem Gehäuse erleichtern. Der Träger kann auch direkt als Gehäuse der Leuchtenanordnung oder als Gehäuse für Anschlußkontakte der Kontaktplatten ausgeführt werden. Vorzugsweise werden diese Anschlußkontakte der Leuchtenanordnung (z.B. Kontaktaufnahmen) in die Kontaktplatten integriert, z.B. ausgestanzt, und dann mitumspritzt. Eine solche Kunststoffummantelung kann so gleichzeitig ein Steckergehäuse für die Kontaktaufnahmen bilden, wodurch die Kosten für diese Zusatzteile entfallen. Dadurch verringern sich die Anzahl der Bauteile und, da zwischen Kontaktplatten und Gehäuse keine Toleranzen auftreten, auch die Montagetoleranzen, d.h., die Qualität wird verbessert und die Kosten werden gesenkt.

Jede LED kann von dem Träger zumindest teilweise abgedeckt, insbesondere mitumspritzt sein, so daß die LEDs durch die Kunststoffummantelung geschützt sind. Allerduings Lichtmuß die Abdeckung für das Licht der LED transparent sein.

Jede LED kann elektrisch leitend an der einen Kontaktplatte befestigt und mittels eines angebondeten Drahts mit der anderen Kontaktplatte elektrisch leitend verbunden sein. Diese elektrische Verbindung ist besonders geeignet für COB-Bauteile (z.B. für einen LED-Chip), die mit ihrer unteren Kontaktfläche elektrisch leitend auf der einen Kontaktplatte befestigt werden. Auf der Oberseite des COB-Bauteils befindet sich eine obere Kontaktfläche, die dann mittels eines Drahts mit der anderen Kontaktplatte elektrisch leitend verbunden wird. Durch die COB-Technik entfallen die Kosten für Herstellung und Montage der übrigen LED-Komponenten (Leadframe, Gehäuse, ...), wodurch die Kosten pro LED sehr gering sind. Es ist deshalb möglich, den Lichtverlust, der durch die breite Lichtabstrahlung des COB-LED-Chips verursacht wird, durch weitere COB-LED-Chips auszugleichen. Die gesamte Leuchtenanordnung ist trotzdem noch wesentlich kostengünstiger als eine herkömmliche Leuchtenanordnung mit SNAP-LEDs oder mit gelöteten LEDs. Außerdem kann der LED-Abstand verringert werden, was ein homogeneres Erscheinungsbild der Leuchtenanordnung ermöglicht.

Da LED-Chips einen sehr breiten Abstrahlwinkel (bis zu 180°) haben, ist der Einsatz einer Fresneloptik wenig effektiv. Der größte Teil des emittierten Lichtes geht in das Gehäuse und wird von der Optik nicht erfaßt. Alternativ wäre eine Reflektoroptik denkbar, jedoch ist eine Plazierung der LED im Brennpunkt des Reflektors durch die geringe Bauhöhe sehr schwierig und der Reflektor nicht sehr effektiv. Außerdem ist eine Bedampfung der Reflektorfläche nötig, was hohe Kosten verursacht. Daher ist es von besonderem Vorteil, wenn der Träger um jeden trägerfreien Aufnahmebereich herum jeweils einen Reflektorabschnitt für die jeweilige LED bildet. Der Reflektorabschnitt kann ein polierter (z.B. weißer) Trichter sein, der das von der LED seitlich abgestrahlte Licht nach vorne reflektiert. Dadurch kann der optische Wirkungsgrad der LED weiter erhöht werden, und es ist in der Leuchtenanordnung eine geringere Anzahl an LEDs erforderlich. Die Abstrahlcharakteristik der LED kann somit beeinflußt und den Erfordernissen angepaßt werden. Die Kunststoffummantelung der Kontaktplatten und die innerhalb des Reflektorabschnitts vertieft liegenden LEDs machen die gesamte Leuchtenanordnung unempfindlicher gegen Beschädigungen.

Die Leuchtenanordnung ist noch besser geschützt, wenn die LEDs in dem trägerfreien Aufnahmebereich jeweils von einer separaten Schutzschicht abgedeckt sind. Diese Schutzschicht kann z.B. eine für das Licht der LED transparente Harzschicht oder Silikonschicht sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: schematisch ein Ausführungsbeispiel einer erfindungsgemäßen Leuchtenanordnung;
- Fig. 2: die einzelnen Schritte eines ersten Verfahrens zum Herstellen der in Fig. 1 gezeigten Leuchtenanordnung;
- Fig. 3: die einzelnen Schritte eines zweiten Verfahrens zum Herstellen der in Fig. 1 gezeigten Leuchtenanordnung;
- Fig. 4: die einzelnen Schritte eines dritten Verfahrens zum Herstellen der in Fig. 1 gezeigten Leuchtenanordnung;
- Fig. 5: eine Leuchtenanordnung (Fig. 5a) nach dem Stand der Technik, bei der zwei Leiterbahnen jeweils von LEDs (Fig. 5b) zusammengehalten werden; und
- Fig. 6: den Aufbau einer COB-LED-Leuchtenanordnung auf einer herkömmlichen Leiterplatte in Seitenansicht (Fig. 6a) und in Draufsicht (Fig. 6b).

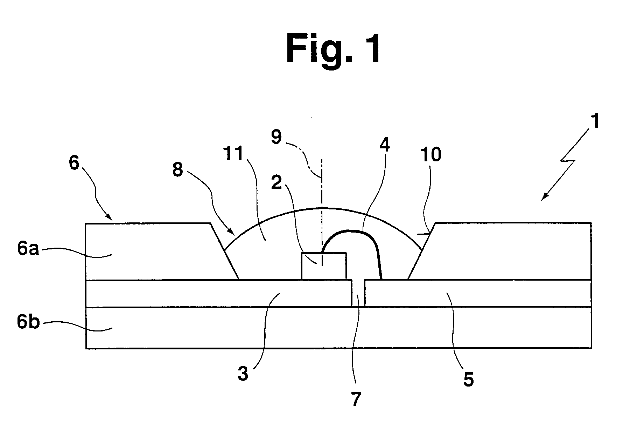

In **Fig. 1** ist eine Leuchtenanordnung **1** mit einer LED gezeigt, welche im dargestellten Ausführungsbeispiel ein LED-Chip **2** mit zwei Chip-Kontakten ist.

Der LED-Chip 2 ist auf einer ersten Kontaktplatte **3** befestigt, wobei der auf der Unterseite des LED-Chips 2 befindliche eine Chip-Kontakt elektrisch leitend mit der Kontaktplatte 3 verbunden ist. Der andere Chip-Kontakt, der sich auf der Oberseite des LED-Chips 2 befindet, ist über einen (Bond)Draht **4** mit einer zweiten Kontaktplatte **5** elektrisch leitend verbunden. Die beiden Kontaktplatten 3, 5, die z.B. aus einem Kupferblech ausgestanzt sein können, sind durch einen Träger **6** voneinander beabstandet (Spalt **7**) gehalten. Der Spalt 7 sollte so gering wie möglich sein, z.B. ca. 0,5 mm. Der Träger 6 besteht aus elektrisch isolierendem Material (z.B. Kunststoff) und ummantelt die beiden Kontaktplatten 3, 5 mit einer oberen und einer unteren Trägerschicht **6a** bzw. **6b,** wobei die Oberseite der Kontaktplatten 3, 5 im Aufnahmebereich **8** um die LED 2 herum trägerfrei ist. Die an diesen trägerfreien Aufnahmebereich 8 angrenzenden Stirnflächen des Trägers 6 verlaufen schräg zur optischen Achse **9** der LED und bilden so Reflektorabschnitte **10**, die von der LED seitlich abgestrahlte Lichtstrahlen nach vorne reflektieren. Um den LED-Chip 2 vor Beschädigungen zu schützen, ist der trägerfreie Aufnahmebereich 8 mit einer für das Licht der LED transparenten Schutzschicht **11** abgedeckt. Der LED-Chip **2** und seine Kontaktierung können z.B. dem COB-LED-Chip 61 der Fig. 6 entsprechen.

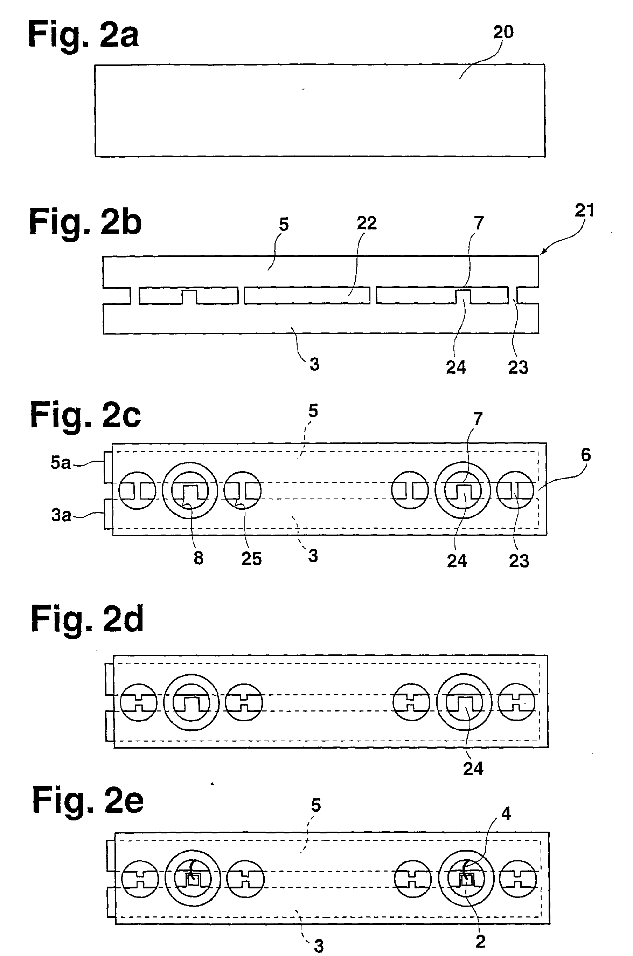

**Fig. 2** zeigt die einzelnen Verfahrensschritte zum Herstellen der in Fig. 1 gezeigten Leuchtenanordnung 1. Aus einem Blech **20** (**Fig. 2a**) aus elektrisch leitendem Material (z.B. Kupfer) wird ein Gitter **21** mit den zwei Kontaktplatten 3, 5 ausgestanzt, ausgeschnitten oder ausgeätzt (**Fig. 2b**), welche durch einen breiten Trennspalt **22** voneinander beabstandet und zunächst noch über mehrere stegförmige Verbindungen **23** miteinander verbunden sind. An der einen Kontaktplatte 3 ragen zwei Vorsprünge **24** in den Trennspalt 22 hinein, wodurch der Trennspalt 22 in diesem Bereich auf die Breite des schmaleren Spaltes 7, z.B. auf ca. 0,5 mm, verengt ist. Im Gegensatz zum breiten Trennspalt 22, der mit einer großen Toleranz gefertigt sein kann, weist der schmalere Spalt 7 eine nur geringe Toleranz auf und kann entweder gestanzt oder mittels eines Lasers hergestellt sein. Das Gitter 21 wird mit dem Träger 6 aus Kunststoff ummantelt, indem das komplette Gitter 21 in ein Spritzwerkzeug eingelegt und mit Kunststoff umspritzt wird (**Fig. 2c**). Auf der Oberseite der Kontaktplatten 3, 5 werden jeweils kreisrunde Aufnahmebereiche 8 um die Vorsprünge 24 herum und kreisrunde Bereiche **25** um die Verbindungen 23 herum kunststoff- bzw. trägerfrei gelassen, indem diese Bereiche 8, 25 während des Spritzvorgangs z.B. mittels eines Stempels abgedeckt werden. Die Vorsprünge 24 sind jeweils mittig in den trägerfreien Aufnahmebereichen 8 angeordnet. Um die Kontaktplatten 3, 5 elektrisch kontaktieren zu können, bleiben Kontaktenden **3a, 5a** der Kontaktplatten 3, 5 ebenfalls trägerfrei. Die Verbindungen 23 werden dann entweder noch im Spritzwerkzeug oder nachträglich in einem weiteren Arbeitsgang durchtrennt, so daß die beiden Kontaktplatten 3, 5 voneinander vollständig getrennt sind (**Fig. 2d**). Zwei LED-Chips 2 werden in den trägerfreien Aufnahmebereichen 8 jeweils mit ihrem unteren Chip-Kontakt elektrisch leitend auf den Vorsprünge 24 der ersten Kontaktplatte 3 befestigt und mit ihrem oberen Chip-Kontakt über den Draht 4 mit der zweiten Kontaktplatte 5 elektrisch leitend verbunden (gebondet) (**Fig. 2e**). Abschließend wird jeder LED-Chip 2 noch mit der transparenten Schutzschicht übergossen.

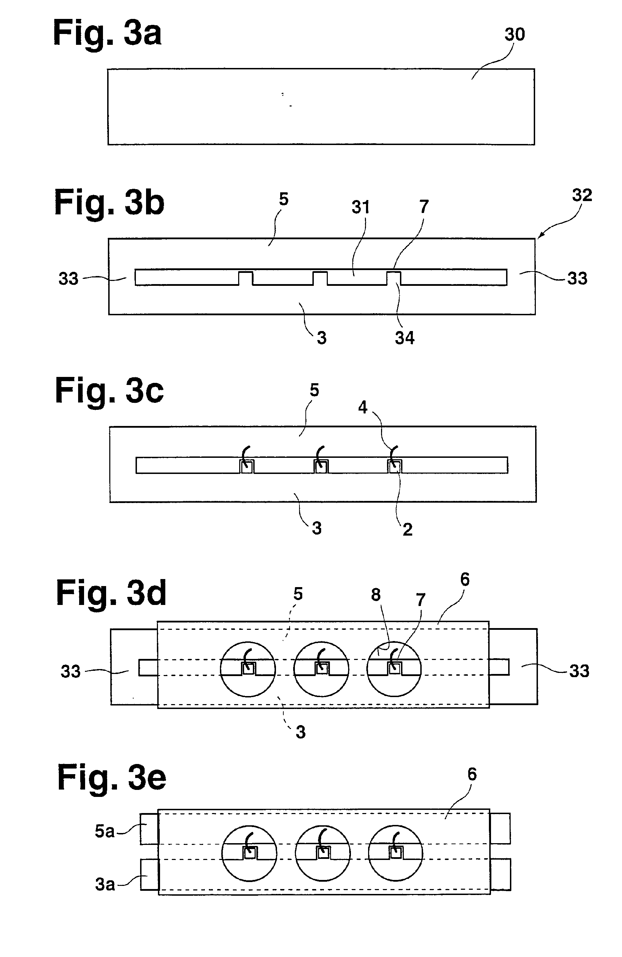

In **Fig. 3** ist eine andere Variante zum Herstellen der in Fig. 1 gezeigten Leuchtenanordnung 1 gezeigt. Aus einem Blech **30** (**Fig. 3a**) aus elektrisch leitendem Material (z.B. Kupfer) wird durch Ausstanzen, Ausschneiden oder Ausätzen des Trennspaltes **31** ein Gitter **32** mit den zwei Kontaktplatten 3, 5 hergestellt (**Fig. 3b**), welche endseitig jeweils über eine Verbindung **33** zunächst noch miteinander verbunden sind. In den Trennspalt 31 ragen jeweils Vorsprünge **34** der Kontaktplatte 3 hinein, wodurch der Trennspalt 31 in diesen Bereichen jeweils auf die Breite des schmaleren Spaltes 7, z.B. auf ca. 0,5 mm, verengt ist. Auf jeden Vorsprung 34 wird jeweils ein LED-Chip 2 mit seinem unteren Chip-Kontakt elektrisch leitend aufgebracht und jeweils mit seinem oberen Chip-Kontakt über den Draht 4 an die zweite Kontaktplatte 5 elektrisch leitend angeschlossen (gebondet) (**Fig. 3c**). Das Gitter 32 wird dann in ein Spritzwerkzeug eingelegt und mit dem Träger 6 umspritzt (**Fig. 3d**), wobei die Kontaktplatten 3, 5 im Bereich der Verbindungen 33 und der kreisrunden Aufnahmebereiche 8 um die LED-Chips 2 herum jeweils trägerfrei gelassen werden. Die Verbindungen 33 werden dann entweder noch im Spritzwerkzeug oder nachträglich in einem weiteren Arbeitsgang durchtrennt (**Fig. 3e**). Die Kontaktenden 3a, 5a der Kontaktplatten 3, 5 sind durch ihre über den Träger 6 überstehenden Enden gebildet. Abschließend wird jeder LED-Chip 2 noch mit der transparenten Schutzschicht überzogen.

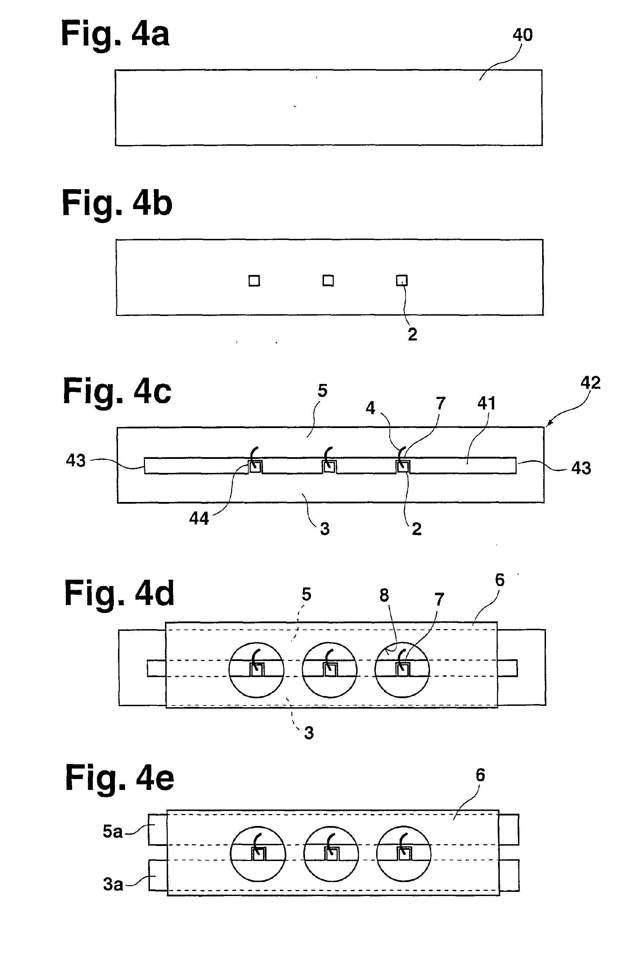

In **Fig. 4** ist noch eine weitere Variante zum Herstellen der in Fig. 1 gezeigten Leuchtenanordnung 1 gezeigt. Auf ein Blech **40** (**Fig. 4a**) aus elektrisch leitendem Material (z.B. Kupfer) werden mehrere LED-Chips 2 mit ihren unteren Chip-Kontakten jeweils elektrisch leitend aufgebracht (**Fig. 4b**). Indem nahe der LED-Chips 2 der Trennspalt **41** ausgestanzt, ausgeschnitten oder ausgeätzt wird, wird ein Gitter **42** mit den zwei Kontaktplatten 3, 5 hergestellt, welche endseitig jeweils über eine Verbindung **43** zunächst noch miteinander verbunden sind. In den Trennspalt 41 ragen jeweils Vorsprünge **44** der Kontaktplatte 3 hinein, auf denen die LED-Chips 2 befestigt sind. Durch die Vorsprünge 44 ist der Trennspalt 41 in diesen Bereichen jeweils auf die Breite des schmaleren Spaltes 7, z.B. auf ca. 0,5 mm, verengt. Die oberen Chip-Kontakte der LED-Chips 2 werden jeweils über den Draht **4** an die andere Kontaktplatte 5 elektrisch leitend angeschlossen (gebondet) (**Fig. 4c**). Das Gitter 42 wird dann in ein Spritzwerkzeug eingelegt und mit dem Träger 6 umspritzt (**Fig. 4d**), wobei die Kontaktplatten 3, 5 im Bereich der Verbindungen 43 und die kreisrunden Aufnahmebereiche 8 um die LED-Chips 2 herum jeweils trägerfrei gelassen werden. Die Verbindungen 43 werden dann entweder noch im Spritzwerkzeug oder nachträglich in einem weiteren Arbeitsgang durchtrennt (**Fig. 4e**). Die Kontaktenden 3a, 5a der Kontaktplatten 3, 5 sind durch ihre über den Träger 6 überstehenden Enden gebildet. Abschließend wird jeder LED-Chip 2 noch mit der transparenten Schutzschicht überzogen.

## Patentansprüche

1. Leuchtenanordnung (1) mit mindestens zwei voneinander beabstandet gehaltenen Kontaktplatten (3, 5) und mit mehreren mit den Kontaktplatten (3, 5) elektrisch leitend verbundenen LEDs,
**dadurch gekennzeichnet,**
**daß** die Kontaktplatten (3, 5) durch einen elektrisch isolierenden Träger (6) voneinander beabstandet gehalten sind.

2. Leuchtenanordnung nach Anspruch 1, **dadurch gekennzeichnet, daß** der Träger (6) auf der Ober- und/oder auf der Unterseite der Kontaktplatten (3, 5) vorgesehen ist.

3. Leuchtenanordnung nach Anspruch 1 oder 2, **dadurch gekennzeichnet, daß** der Träger (6) durch Umspritzen der Kontaktplatten (3, 5) mit Kunststoff hergestellt ist.

4. Leuchtenanordnung nach einem der vorhergehenden Ansprüche, **dadurch gekennzeichnet, daß** der Träger (6) einen Gehäuseteil der Leuchtenanordnung (1) und/oder ein Gehäuse für Anschlußkontakte der Kontaktplatten (3, 5) bildet.

5. Leuchtenanordnung nach einem der vorhergehenden Ansprüche, **dadurch gekennzeichnet, daß** die LEDs jeweils nur an einer der Kontaktplatten (3) befestigt sind.

6. Leuchtenanordnung nach einem der vorhergehenden Ansprüche, **dadurch gekennzeichnet, daß** die LEDs von dem Träger (6) zumindest teilweise abgedeckt sind.

7. Leuchtenanordnung nach einem der Ansprüche 1 bis 5,
**dadurch gekennzeichnet, daß** auf den Kontaktplatten (3, 5) jeweils trägerfreie Aufnahmebereiche (8) für die LEDs vorgesehen sind.

8. Leuchtenanordnung nach Anspruch 7, **dadurch gekennzeichnet, daß** jede LED elektrisch leitend an der einen Kontaktplatte (3) befestigt und mittels eines Drahts (4) mit der anderen Kontaktplatte (5) elektrisch leitend verbunden ist.

9. Leuchtenanordnung nach Anspruch 7 oder 8, **dadurch gekennzeichnet, daß** die LEDs jeweils ein LED-Chip (2) sind.

10. Leuchtenanordnung nach einem der Ansprüche 7 bis 9,
**dadurch gekennzeichnet, daß** der Träger (6) um jeden trägerfreien Aufnahmebereich (8) herum jeweils einen Reflektorabschnitt (10) für die LEDs bildet.

11. Leuchtenanordnung nach einem der Ansprüche 7 bis 10,
**dadurch gekennzeichnet, daß** die LEDs in den trägerfreien Aufnahmebereichen (8) jeweils von einer separaten Schutzschicht (11) abgedeckt sind.
